# EUROPÄISCHE PATENTSCHRIFT

(11) **EP 3 141 773 B1**
(45) Veröffentlichungstag und Bekanntmachung des Hinweises auf die Patenterteilung: **20.03.2019**
(21) Anmeldenummer: 16188169.3
(22) Anmeldetag: 09.09.2016
(51) Int. Cl.: B60G 15/12, B60G 17/052, B62D 33/06, F16F 9/43, F16F 9/50, F16F 9/06, F16F 9/084, F16F 9/04

(54) **LUFTFEDER**
PNEUMATIC SPRINGS
AMORTISSEUR PNEUMATIQUE

(30) Priorität: 11.09.2015 DE 102015115400
(43) Veröffentlichungstag der Anmeldung: 15.03.2017
(73) Patentinhaber: Vibracoustic CV Air Springs GmbH, 20099 Hamburg (DE)
(72) Erfinder: Weber, Michael, 21244 Buchholz (DE)
(74) Vertreter: Flügel Preissner Schober Seidel

(56) Entgegenhaltungen:
- WO-A2-2010/006159
- DE-A1-102010 012 346
- US-B1- 6 332 624

## Beschreibung

Die vorliegende Erfindung betrifft eine Luftfeder zur Dämpfung und Steuerung der Niveaulage einer Fahrerkabine oder eines Kraftfahrzeugs.

Luftfedern der eingangs genannten Art federn zwei zueinander bewegliche Teile ab und erhöhen dadurch den Federungskomfort von Kraftfahrzeugen oder Fahrerkabinen. Herkömmliche Luftfedern weisen einen Luftfederbalg aus Gummi auf, der mit einem zumeist als Deckel ausgebildeten oberen Abschlusselement und einem Abrollkolben verbunden ist, um einen luftdicht abgeschlossenen Arbeitsraum zu bilden. Der Arbeitsraum ist mit einem Fluid, insbesondere Druckluft, als Arbeitsmedium befüllt. Bei einer Ein- und Ausfederung rollt der Luftfederbalg an der Außenfläche des Abrollkolbens ab und federt so die eingeleiteten Schwingungen ab.

Neben der zuvor beschriebenen Federungsfunktion kann in eine Luftfeder auch eine Dämpfungsfunktion intergiert sein. Eine derartige Luftfeder kann auch als Luftfederdämpfer bezeichnet werden. Die Dämpfung erfolgt zumeist dadurch, dass das Arbeitsmedium zwischen dem Arbeitsraum und einer weiteren Kammer über einen Dämpfungskanal hin und her strömt. Aufgrund des verengten Querschnitts des Dämpfungskanals und der damit verbundenen Reibung werden die eingeleiteten Schwingungen bedämpft. Durch Variation des Dämpfungskanalquerschnitts lassen sich unterschiedliche Dämpfungscharakteristiken einstellen.

Des Weiteren werden Luftfedern auch dazu verwendet, um eine gewünschte Niveaulage eines Kraftfahrzeugs oder einer Fahrerkabine bei unterschiedlicher Beladung oder Gewichtsbelastung konstant zu halten oder einstellbar zu verändern. Dies erfolgt dadurch, dass der Arbeitsraum mit Druckluft befüllt oder dass aus dem Arbeitsraum Druckluft abgelassen wird. Hierzu ist der Arbeitsraum mit einer Druckluftsteuereinrichtung verbunden, die den Federhub abhängig vom Beladungszustand oder der Gewichtbelastung verändert. Das Befüllen beziehungsweise Ablassen von Druckluft erfolgt zumeist über außerhalb der Arbeitskammer angeordnete Steuerventile.

Aus DE 10 2011 108 249 A1 ist eine Luftfeder bekannt, die ein in die Luftfeder integriertes, mechanisch betätigbares Steuerventil zur Steuerung der Niveaulage eines Kraftfahrzeugs oder einer Fahrerkabine aufweist. Das Steuerventil ist an dem Deckel angebracht und umfasst Regelventile zur Regelung der Druckluftzufuhr beziehungsweise des Druckluftablasses. Die Betätigung der Druckregelventile erfolgt über Nocken, die an einer drehbaren Nockenwelle angebracht sind. Die Drehbewegung der Nockenwelle erfolgt dabei über einen Schlepphebel, der mit seinem freien Ende an einer Auflagefläche am Abrollkolben der Luftfeder aufliegt. Durch die Schwenkbewegung des Schlepphebels wird die Nockenwelle verdreht, wodurch je nach Ein- oder Ausfederung der Luftfeder einer der Nocken einen der Stößel der von Federkräften zugehaltenen Regelventile betätigt.

Ferner geht aus DE 10 2011 114 570 A1 eine Luftfederanordnung mit einer integrierten Ventilsteuerung zur Steuerung der Niveaulage eines Kraftfahrzeugs oder einer Fahrerkabine hervor. Die integrierte Ventilsteuerung umfasst ein Lufteinlassventil und ein Luftauslassventil, die im Bereich eines Deckels angeordnet sind. Zum Öffnen und Schließen der Ventile ist eine Druckfedereinrichtung vorgesehen, die zweiteilig ausgebildet ist. Die Druckfedereinrichtung weist eine dem Abrollkolben oder dem Deckel zugewandte Zentralfeder und eine dem Luftauslassventil zugewandte Steuerventilvorspannfeder auf. Die Zentralfeder und die Steuerventilvorspannfeder sind auf einem zwischen dem Abrollkolben und dem Deckel axial frei beweglich gelagerten Führungsrohr angeordnet. Zwischen den beiden Federn ist ein radial abragender Anschlag angeordnet, der als Steuerungsmittel zum Betätigen des Ventilstößels des Einlassventils dient. Die Druckfedereinrichtung wird zwischen Spannmittel gehalten, wobei eines der Spannmittel das Auslassventil kontaktiert. Beim Einfedern gleitet das Führungsrohr nach unten und gleichzeitig wird die Steuerventilvorspannfeder komprimiert bis der Anschlag nach Überbrückung eines Leerlaufs das Einlassventil kontaktiert und dieses betätigt. Bei einer Ausfederung bewegt sich das Führungsrohr nach oben, wobei die Steuerventilvorspannfeder ausfedert, so dass sich das dem Auslassventil zugeordnete Spannmittel von diesem wegbewegt und das Auslassventil geöffnet wird.

Ferner gehen aus DE 10 2010 012 346 A1 und US 6,332,624 B1 Luftfedern hervor, die einen Deckel, einen Abrollkolben und wenigstens einen Luftfederbalg aufweisen. In die Luftfedern sind ein Niveausteuerungssystem zum Zuführen und Abführen von Druckluft sowie ein hydraulischer Stoßdämpfer integriert.

Ferner offenbart WO 2010/006159 A2 eine Luftfeder, die einen Deckel, einen Abrollkolben und zwei mit dem Abrollkolben und dem Deckel verbundene Luftfederbälge aufweist. Zwischen dem Deckel, dem Abrollkolben und dem inneren Luftfederbalg ist eine erste Arbeitskammer, und zwischen dem Deckel, dem Abrollkolben, dem inneren Luftfederbalg und dem äußeren Luftfederbalg ist eine zweite Arbeitskammer gebildet. Die beiden Arbeitskammern sind über eine in die Seitenwand des Abrollkolbens eingebrachte Bohrung miteinander verbunden, in die ein Ventil eingebracht ist. Ferner ist in dem Abrollkolben ein in axialer Richtung beweglicher Kolben angeordnet, der mit Bohrungen zum Einstellen einer Dämpfungscharakteristik versehen ist. Die Bohrungen sind zudem mit Ventilen versehen.

Der vorliegenden Erfindung liegt die **Aufgabe** zugrunde, eine Luftfeder zu schaffen, die eine erhöhte Dämpfung, eine Niveauregulierung und gleichzeitig eine einfache und kompakte Bauweise aufweist und zudem kostengünstig in der Herstellung ist.

Zur **Lösung** der Aufgabe wird eine Luftfeder mit den Merkmalen des Anspruchs 1 vorgeschlagen.

Vorteilhafte Ausgestaltungen der Luftfeder sind Gegenstand der abhängigen Ansprüche.

Die Luftfeder zur Dämpfung und Steuerung der Niveaulage einer Fahrerkabine oder eines Kraftfahrzeugs weist einen Deckel, einen Abrollkolben und wenigstens einen Luftfederbalg auf, wobei ein Niveausteuerungssystem zum Zuführen und/oder Abführen von Druckluft, Gas oder einem kompressiblen Medium in die Luftfeder integriert ist, um die Niveaulage der Fahrerkabine oder des Kraftfahrzeugs zu steuern und wobei mindestens zwei Dämpfungsvorrichtungen in die Luftfeder integriert sind, die als Arbeitsmedium Druckluft, Gas oder ein kompressibles Medium verwenden. Durch die in die Luftfeder integrierte Dämpfungsvorrichtung weist die Luftfeder eine kompakte Bauweise auf, so dass der benötigte Bauraum der Luftfeder reduziert ist. Zudem kann auf eine Außenführung für den Luftfederbalg verzichtet werden, was die Montage der Luftfeder vereinfacht und somit deren Herstellung kostengünstig macht. Über das Niveausteuerungssystem kann die Niveaulage einer Fahrerkabine oder eines Kraftfahrzeugs bei unterschiedlicher Beladung oder Gewichtsbelastung konstant gehalten oder verändert werden.

Die Dämpfungsvorrichtung ist als Luftfederdämpfer ausgebildet der als Arbeitsmedium Luft, insbesondere Druckluft, verwendet. Zudem verwendet die Dämpfungsvorrichtung als Arbeitsmedium Gas oder ein kompressibles Medium. Ferner kann die Dämpfungsvorrichtung als Hydraulikdämpfer ausgebildet sein. Erfindungsgemäß sind mindestens zwei Dämpfungsvorrichtungen in die Luftfeder integriert. Durch die Integration zweier Dämpfungsvorrichtungen in die Luftfeder wird die Dämpfung und damit einhergehend der Dämpfungseffekt erhöht.

In einer vorteilhaften Ausgestaltung sind die beiden Dämpfungsvorrichtungen parallel geschaltet. Dadurch kann die Dämpfung vergrößert werden, da bei einer Ein- oder Ausfederung beide Dämpfungsvorrichtungen aktiv sind. Zudem lassen sich durch die Parallelschaltung der beiden Dämpfungsvorrichtungen zwei voneinander unabhängige Dämpfungen erzeugen.

In einer vorteilhaften Ausgestaltung weist eine erste Dämpfungsvorrichtung eine im Volumen veränderliche erste Kammer, eine im Volumen konstant bleibende zweite Kammer und eine die beiden Kammern miteinander verbindende erste Dämpfungskanaleinrichtung auf. Weiterhin vorteilhaft weist eine zweite Dämpfungsvorrichtung eine im Volumen veränderliche dritte Kammer, eine im Volumen veränderliche vierte Kammer und eine die beiden Kammern miteinander verbindende zweite Dämpfungskanaleinrichtung auf. Die im Volumen veränderliche erste, dritte und vierte Kammer können als aktive Volumen und die im Volumen konstant bleibende zweite Kammer kann als passives Volumen bezeichnet werden. Beim Ein- und Ausfedern verändert sich das Volumen der veränderlichen Kammern, so dass die in den Kammern befindliche Druckluft oder das in den Kammern befindliche Gas oder kompressible Medium über die jeweiligen Dämpfungskanaleinrichtungen hin und her strömt und so eine Dämpfung erzeugt. Durch Variation des Durchmessers der Dämpfungskanaleinrichtungen ist es möglich, die Dämpfungsvorrichtungen auf unterschiedliche Schwingungsfrequenzen abzustimmen. Darüber hinaus kann der Querschnitt der Dämpfungskanaleinrichtungen mittels jeweils eines Ventils freigebbar oder verschließbar sein. Dadurch kann die Dämpfungsfunktion ein- und ausgeschaltet oder die Dämpfungscharakteristik verändert werden. Die erste Dämpfungskanaleinrichtung kann einen Dämpfungskanal oder mehrere Dämpfungskanäle aufweisen, die die erste Kammer und die zweite Kammer miteinander verbinden. Die zweite Dämpfungskanaleinrichtung kann einen Dämpfungskanal oder mehrere Dämpfungskanäle aufweisen, die die dritte Kammer und die vierte Kammer miteinander verbinden.

Vorteilhaft ist die erste Kammer von dem Deckel, dem Abrollkolben und dem Luftfederbalg begrenzt und die zweite Kammer ist von dem Abrollkolben begrenzt, wobei die erste Dämpfungskanaleinrichtung in dem Abrollkolben eingebracht ist. Bei einer Einfederung verringert sich das Volumen der ersten Kammer, so dass die in der ersten Kammer befindliche Druckluft oder das in der ersten Kammer befindliche Gas oder kompressible Medium über die Dämpfungskanaleinrichtung in die im Abrollkoben ausgebildete zweite Kammer strömt. Während des Ausfederns vergrößert sich das Volumen der ersten Kammer, so dass ein Unterdruck erzeugt wird, der zur Folge hat, dass die in der zweiten Kammer befindliche Druckluft oder das in der zweiten Kammer befindliche Gas oder kompressible Medium über die erste Dämpfungskanaleinrichtung wieder in die erste Kammer strömt. Infolge dieses Hin- und Herströmens erfolgt eine Dämpfung. Vorteilhaft ist die zweite Kammer von einer Außenwandung und einer Innenwandung des Abrollkolbens begrenzt. Dadurch verändert sich während einer Ein- und Ausfederung der Luftfeder das Volumen der zweiten Kammer nicht und bleibt stets konstant. Die in dem Abrollkolben integrierte zweite Kammer stellt vorteilhaft ein Zusatzvolumen dar. Die erste Dämpfungskanaleinrichtung kann aus einem in den Abrollkolben eingebrachten Dämpfungskanal und/oder mehrere in den Abrollkolben eingebrachte Dämpfungskanäle gebildet sein.

Die dritte Kammer und die vierte Kammer können von einem in dem Abrollkolben ausgebildeten zylindrischen Gehäuse begrenzt sein, wobei die dritte und die vierte Kammer durch einen beweglichen Kolben voneinander getrennt sind. Vorteilhaft ist die zweite Dämpfungskanaleinrichtung zwischen dem Kolben und dem zylindrischen Gehäuse gebildet und/oder die zweite Dämpfungskanaleinrichtung ist in dem Kolben eingebracht. Die zweite Dämpfungskanaleinrichtung kann als ein in den Kolben eingebrachter Dämpfungskanal ausgebildet sein, der die dritte Kammer und die vierte Kammer miteinander verbindet. Ferner kann die zweite Dämpfungskanaleinrichtung durch einen Spalt gebildet sein, der zwischen dem Kolben und der Innenseite des zylindrischen Gehäuses gebildet ist. Hierzu kann der Kolben von einer Innenseite des zylindrischen Gehäuses beabstandet sein. Ferner kann die zweite Dämpfungskanaleinrichtung mehrere Dämpfungskanäle aufweisen. So kann ein Dämpfungskanal in dem Kolben eingebracht sein und ein weiterer Dämpfungskanal kann durch einen Spalt gebildet sein, der zwischen dem Kolben und der Innenseite des zylindrischen Gehäuses gebildet ist. Während einer Einfederung kann die vierte Kammer komprimiert und die dritte Kammer vergrößert werden, wobei die Druckluft, das Gas oder das kompressible Medium über die zweite Dämpfungskanaleinrichtung von der vierten Kammer in die dritte Kammer strömt. Während einer Ausfederung kann das Volumen der dritten Kammer reduziert und das Volumen der vierten Kammer vergrößert werden, wobei die Druckluft, das Gas oder das kompressible Medium über die zweite Dämpfungskanaleinrichtung von der dritten Kammer in die vierte Kammer strömt. Durch das Hin- und Herströmen der Druckluft, des Gases oder des kompressiblen Mediums über die zweite Dämpfungskanaleinrichtung wird ein Dämpfungseffekt erzielt. Das zylindrische Gehäuse kann durch eine Innenwandung des Abrollkolbens gebildet sein. Weiterhin vorteilhaft ist das zylindrische Gehäuse von der zweiten Kammer umgeben. Durch eine Bewegung des Kolbens während einer Ein- und Ausfederung werden die Volumen der dritten und vierten Kammer abwechselnd verkleinert und vergrößert, wobei die Druckluft, das Gas oder das kompressible Medium über die Dämpfungskanaleinrichtung hin und her strömt.

Bevorzugt sind die Kammern als Luftkammern, insbesondere als Druckluftkammern ausgebildet. Ferner können die Kammern auch mit einem Gas oder einem kompressiblen Medium befüllt sein.

Vorteilhaft ist der Kolben innerhalb des zylindrischen Gehäuses geführt.

Weiterhin vorteilhaft ist der Kolben mit einer Kolbenstange verbunden, wobei die Kolbenstange an dem Deckel befestigt ist. Über die Kolbenstange wird der Kolben innerhalb des Gehäuses während einer Ein- und Ausfederung hin und her bewegt. Der Kolben kann kraftschlüssig und/oder stoffschlüssig mit der Kolbenstange verbunden sein.

Vorteilhaft umfasst das Niveausteuerungssystem eine Drucklufteinlasseinrichtung zum Zuführen von Druckluft und eine Druckluftablasseinrichtung zum Abführen von Druckluft. Dadurch kann die Niveaulage eines Kraftfahrzeugs oder einer Fahrerkabine während einer Be- oder Entladung konstant gehalten oder veränderbar gesteuert werden. Ferner kann die Drucklufteinlasseinrichtung zum Zuführen von Gas oder einem kompressiblen Medium und die Druckluftablasseinrichtung kann zum Abführen von Gas oder einem kompressiblen Medium ausgebildet sein. Vorteilhaft sind die Drucklufteinlasseinrichtung und die Druckluftablasseinrichtung derart ausgebildet, dass während einer Einfederung nach Überwindung eines ersten Freiwegs die Drucklufteinlasseinrichtung geöffnet und während einer Ausfederung nach Überwindung eines zweiten Freiwegs die Druckluftablasseinrichtung geöffnet ist. Die Freiwege stellen sicher, dass bei kleinen Ein- oder Ausfederbewegungen die Ventile nicht sofort geöffnet werden. Vorteilhaft betragen die Freiwege zwischen 1 mm und 10 mm, vorzugsweise zwischen 2 mm und 6 mm. Weiterhin vorteilhaft ist die Druckluftablasseinrichtung während einer Einfederung und die Drucklufteinlasseinrichtung ist während einer Ausfederung geschlossen.

In einer vorteilhaften Ausgestaltung weist die Drucklufteinlasseinrichtung wenigstens ein Einlassventil und eine erste Ventilsteuerungseinrichtung auf. Über die Ventilsteuerungseinrichtung wird das Einlassventil während einer Einfederung geöffnet, um Druckluft, Gas oder kompressibles Medium der Luftfeder zuzuführen. Vorteilhaft ist das Einlassventil mit einer Druckluftquelle, einer Gasquelle oder einer Quelle mit einem kompressiblen Medium verbunden, die der Luftfeder Druckluft, Gas oder kompressibles Medium über das Einlassventil zuführt.

In einer vorteilhaften Ausgestaltung weist die erste Ventilsteuerungseinrichtung wenigstens eine erste Druckfeder und einen mit der Druckfeder verbundenen Stößel auf. Eine derartige erste Ventilsteuerungseinrichtung ist vorteilhaft in der Kolbenstange integriert und wirkt mit einem in dem Abrollkolben integrierten und in die vierte Kammer ragenden Einlassventil zusammen.

In einer vorteilhaften Ausgestaltung weist die erste Ventilsteuerungseinrichtung wenigstens eine erste Druckfeder, eine Führungsstange und auf der Führungsstange frei beweglich angeordnete Spannelemente auf, wobei die erste Druckfeder zwischen den beiden Spannelementen aufgenommen ist. Eine derartige erste Ventilsteuerungseinrichtung ist vorteilhaft mit dem Deckel verbunden und wirkt mit einem in dem Abrollkolben integrierten und in die zweite Kammer ragenden Einlassventil zusammen. Weiterhin vorteilhaft ist die Führungsstange mit dem Deckel verbunden und erstreckt sich über die erste Kammer und den ersten Dämpfungskanal in die zweite Kammer, wobei die erste Druckfeder und die Spannelemente an dem innerhalb der zweiten Kammer befindlichen freien Ende der Führungsstange angeordnet sind. Vorteilhaft ist die erste Ventilsteuerungseinrichtung zu dem Einlassventil, insbesondere dessen Stößel, in einer neutralen Lage oder Nulllage beabstandet angeordnet, um so den ersten Freiweg zu bilden. Erst nach Überwindung des ersten Freiwegs drückt die Druckfeder über eines der Spannelemente auf das Einlassventil, insbesondere auf dessen Stößel, so dass das Einlassventil geöffnet ist und Druckluft, Gas oder kompressibles Medium in die Arbeitskammer strömen kann. Bei einer weiteren Einfederung wird die Druckfeder komprimiert.

Vorteilhaft ist das Einlassventil in dem Abrollkolben integriert. Das Einlassventil kann innerhalb der zweiten Kammer oder der vierten Kammer angeordnet sein. Die Ventilsteuerungseinrichtung kann in der Kolbenstange oder in dem Deckel integriert sein.

Die Druckluftablasseinrichtung kann wenigstens ein Auslassventil und eine zweite Ventilsteuerungseinrichtung aufweisen. Über die zweite Ventilsteuerungseinrichtung wird das Auslassventil angesteuert, um so Druckluft, Gas oder kompressibles Medium aus der Luftfeder abzulassen.

In einer vorteilhaften Ausgestaltung weist die zweite Ventilsteuerungseinrichtung eine zweite Druckfeder und eine mit der Druckfeder verbundene Steuerstange auf. Vorteilhaft drückt die zweite Druckfeder die Steuerstange gegen das Auslassventil, so dass dieses während einer Einfederung geschlossen bleibt. Erst bei einer Ausfederung entfernt sich die Steuerstange von dem Auslassventil, so dass das Auslassventil öffnet.

Vorteilhaft ist das Auslassventil in dem Deckel integriert und die zweite Ventilsteuerungseinrichtung ist in dem Abrollkolben integriert. Bevorzugt ist die zweite Ventilsteuerungseinrichtung innerhalb des ersten Dämpfungskanals angeordnet, wobei sich die Steuerstange durch die erste Kammer in Richtung des im Deckel integrierten Auslassventils erstreckt. Weiterhin vorteilhaft sind die zweite Druckfeder und die Steuerstange derart ausgebildet, dass die zweite Druckfeder in einer neutralen Lage oder Nulllage vorgespannt ist. Dadurch kann der zweite Freiweg realisiert werden, so dass bei kleinen Ausfederbewegungen die Steuerstange infolge der Vorspannung weiterhin auf das Auslassventil drückt und dieses geschlossen hält.

Weiterhin vorteilhaft umfasst der Abrollkolben ein Unterteil, ein eine Abrollkontur aufweisendes Oberteil und ein Deckelelement, wobei das Deckelelement derart mit dem Unterteil und dem Oberteil verbindbar ist, dass alle Teile gegeneinander fixiert sind. Bevorzugt sind in dem Unterteil die zweite Kammer und das die dritte und vierte Kammer begrenzende zylindrische Gehäuse ausgebildet. Vorteilhaft ist das Deckelelement kraft- und/oder formschlüssig mit dem Unterteil verbunden. Hierzu kann das Deckelelement mit einem Außengewinde versehen sein, das in ein in dem Unterteil ausgebildetes Innengewinde einschraubbar ist. Vorteilhaft ist das Deckelelement in das zylindrische Gehäuse des Abrollkolbens einschraubbar. Weiterhin vorteilhaft ist das Deckelelement mit einem Durchgang versehen, durch welchen sich die Kolbenstange erstrecken kann. Vorteilhaft verbindet der Durchgang die erste Kammer und die dritte Kammer. Die erste Dämpfungskanaleinrichtung kann in das Oberteil eingebracht sein. Für den Zusammenbau des Abrollkolbens kann das Oberteil auf das Unterteil aufgesetzt werden, wobei zwischen Oberteil und Unterteil ein Dichtungselement, insbesondere ein O-Ring, zur Abdichtung angeordnet werden kann. Anschließend kann das Deckelelement mit dem Unterteil verbunden werden, insbesondere in das Unterteil eingeschraubt werden. Dabei verspannt das Deckelelement das Oberteil gegen das Unterteil und fixiert so alle Teile gegeneinander. Vorteilhaft weist das Deckelelement einen umlaufenden Vorsprung auf, der in einen am Oberteil ausgebildeten Rücksprung eingreifen kann, um so das Oberteil gegen das Unterteil zu verspannen und zu fixieren.

In einer vorteilhaften Ausgestaltung weist der Kolben einen ersten Puffer auf, der eine Bewegung des Kolbens begrenzt. Bevorzugt wirkt der erste Puffer mit dem Gehäuse, insbesondere dessen Deckelelement, zusammen. Der erste Puffer kann auf einer dem Deckelelement zugewandten Oberfläche des Kolbens angeordnet sein. Vorteilhaft ist der erste Puffer mit einem Durchgang versehen, durch den sich die Kolbenstange hindurch erstrecken kann. Alternativ kann der Puffer auf einer der vierten Kammer zugewandten Unterseite des Kolbens oder innerhalb der vierten Kammer angeordnet sein. Vorteilhaft ist der erste Puffer aus einem elastomeren Material. Weiterhin vorteilhaft ist der erste Puffer weich ausgebildet, um eine weiche Kennlinie während eines Anschlagens zu erhalten. Der erste Puffer kann stoffschlüssig mit dem Kolben verbunden sein.

Vorteilhaft weist der Deckel einen zweiten Puffer auf, der eine Bewegung des Deckels und/oder des Abrollkolbens begrenzt. Vorteilhaft ist der zweite Puffer auf einer der ersten Kammer zugewandten Seite des Deckels angeordnet. Weiterhin vorteilhaft weist der zweite Puffer einen Durchgang auf, durch welchen sich die Kolbenstange erstrecken kann. Der zweite Puffer begrenzt während einer Ein- und Ausfederung eine Bewegung von Deckel und/oder Abrollkolben. Vorteilhaft ist der zweite Puffer aus einem elastomeren Material. Weiterhin vorteilhaft ist der erste Puffer weich ausgebildet, um eine weiche Kennlinie während eines Anschlagens zu erhalten. Der zweite Puffer kann stoffschlüssig mit dem Deckel verbunden sein.

In einer vorteilhaften Ausgestaltung ist der Abrollkolben aus Kunststoff, insbesondere einem faserverstärkten Kunststoff, hergestellt.

Nachfolgend wird die Luftfeder anhand von Ausführungsbeispielen näher erläutert, die in den beigefügten Zeichnungen schematisch dargestellt sind. Hierbei zeigen:
- Fig. 1: einen Längsschnitt durch eine Luftfeder gemäß einer ersten Ausführungsform; und
- Fig. 2: einen Längsschnitt durch eine Luftfeder gemäß einer zweiten Ausführungsform.

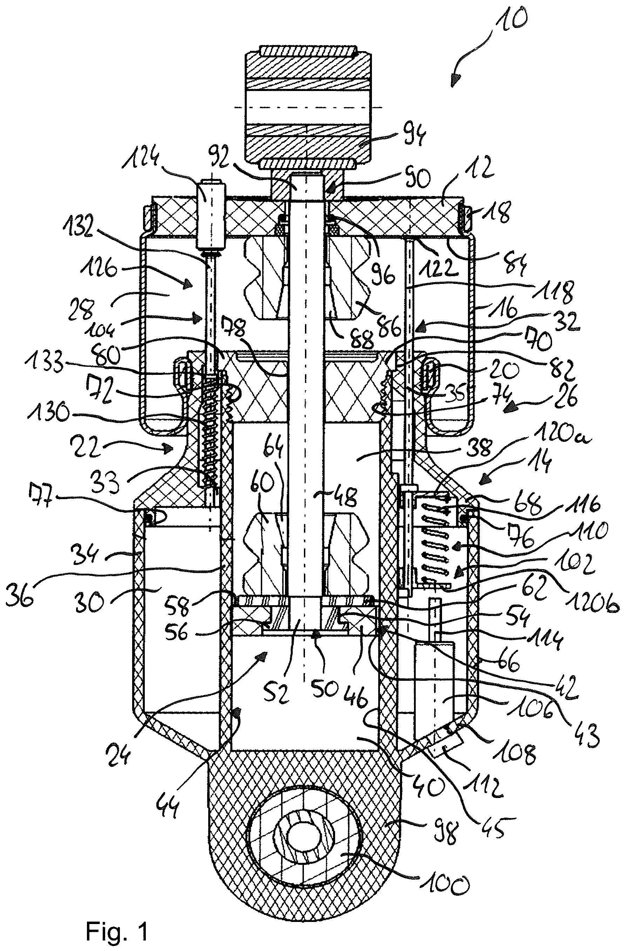

In Fig. 1 ist eine Luftfeder 10 gezeigt, die zur Dämpfung und Niveauregulierung einer nicht dargestellten Fahrerkabine oder eines nicht dargestellten Kraftfahrzeugs dient.

Die Luftfeder 10 weist einen Deckel 12, einen Abrollkolben 14 und einen den Deckel 12 und den Abrollkolben 14 miteinander verbindenden Luftfederbalg 16 auf. Der Luftfederbalg 16 ist mittels eines ersten Klemmrings 18 an dem Deckel 12 und mittels eines zweiten Klemmrings 20 an dem Abrollkolben 14 luftdicht befestigt. In die Luftfeder 10 sind zudem eine erste Dämpfungsvorrichtung 22 und eine zweite Dämpfungsvorrichtung 24 integriert, wobei die beiden Dämpfungsvorrichtungen 22, 24 parallel zueinander geschaltet sind. Darüber hinaus weist die Luftfeder 10 ein Niveauregulierungssystem 26 zum Zuführen und/oder Abführen von Druckluft, Gas oder einem kompressiblen Medium auf, um die Niveaulage einer Fahrerkabine oder eines Kraftfahrzeugs zu steuern.

Die erste Dämpfungsvorrichtung 22 weist eine im Volumen veränderliche erste Kammer 28, eine im Volumen konstant bleibende zweite Kammer 30 und eine die beiden Kammern 28, 30 miteinander verbindende ersten Dämpfungskanaleinrichtung 32 auf. Die erste Dämpfungskanaleinrichtung 32 umfasst einen ersten Dämpfungskanal 33 und einen zweiten Dämpfungskanal 35, die die erste Kammer 22 und die zweite Kammer 24 miteinander verbinden. Die erste Kammer 28 ist durch den Deckel 12, den Abrollkolben 14 und den Luftfederbalg 16 begrenzt. Die zweite Kammer 30 ist als Zusatzvolumen in dem Abrollkolben 14 integriert und ist von einer Außenwandung 34 und einer Innenwandung 36 des Abrollkolbens 14 begrenzt. Der erste Dämpfungskanal 33 und der zweite Dämpfungskanal 35, die die beiden Kammern 28, 30 miteinander verbinden, sind in dem Abrollkolben 14 eingebracht.

Die zweite Dämpfungsvorrichtung 24 weist eine im Volumen veränderliche dritte Kammer 38, eine im Volumen veränderliche vierte Kammer 40 und eine die beiden Kammern 38, 40 miteinander verbindende zweite Dämpfungskanaleinrichtung 42 auf. Die beiden Kammern 38, 40 sind von einem zylindrischen Gehäuse 44 begrenzt, welches durch die Innenwandung 36 gebildet ist. Innerhalb des zylindrischen Gehäuses 44 ist ein beweglicher Kolben 46 angeordnet, der die beiden Kammern 38, 40 voneinander trennt. Die zweite Dämpfungskanaleinrichtung 42 weist einen dritten Dämpfungskanal 43 auf. Der dritte Dämpfungskanal 43 ist durch einen zwischen dem Kolben 46 und einer Innenseite 45 des zylindrischen Gehäuses 44 gebildeten Spalt gebildet. Der Kolben 46 ist innerhalb des zylindrischen Gehäuses 44 geführt.

Der Kolben 46 ist mit einer Kolbenstange 48 verbunden, die endseitig mit dem Deckel 12 verbunden ist. Die Kolbenstange 48 ist an ihrem ersten Ende 50 mit dem Kolben 46 verbunden. Hierzu weist die Kolbenstange 48 einen ersten Gewindeabschnitt 52 auf, der in einen ersten Durchgang 54 des Kolbens 46 eingeführt ist. Zum Fixieren der Kolbenstange 48 an dem Kolben 46 wird dann von unten eine Mutter 56 auf den ersten Gewindeabschnitt 52 aufgeschraubt.

Auf einer Oberseite 58 des Kolbens 46 ist ein erster Puffer 60 angeordnet, der bevorzugt aus einem elastomeren Material ist. Der erste Puffer 60 ist auf einer Platte 62 angeordnet, insbesondere stoffschlüssig mit dieser verbunden, wobei die Platte 62 auf der Oberseite 58 des Kolbens 46 aufliegt und über die Kolbenstange 62 und die Mutter 56 an dem Kolben 46 fixiert ist. Der erste Puffer 60 ist zudem mit einem zweiten Durchgang 64 versehen, durch welchen sich die Kolbenstange 48 erstreckt.

Der Abrollkolben 14 ist mehrteilig ausgebildet und weist ein Unterteil 66, ein eine Abrollkontur aufweisendes Oberteil 68 und ein Deckelelement 70 auf. In dem Unterteil 66 ist die zweite Kammer 30 und das die dritte Kammer 38 und die vierte Kammer 40 begrenzende zylindrische Gehäuse 44 ausgebildet. An dem Oberteil 68 ist der Luftfederbalg 16 über den zweiten Klemmring 20 befestigt. Bei einer Einfederung rollt der Luftfederbalg 16 an der Außenkontur beziehungsweise die eine Abrollkontur bildende Außenkontur des Oberteils 68 ab. Über das Deckelelement 70 werden das Unterteil 66 und das Oberteil 68 miteinander verbunden. Hierzu weist das Deckelelement 70 ein Außengewinde 72 auf, das in ein Innengewinde 74 des zylindrischen Gehäuses 44 einschraubbar ist. Zum Zusammenbau des Abrollkolbens 14 wird das Oberteil 68 auf das Unterteil 66 aufgesetzt, wobei zwischen dem Oberteil 68 und dem Unterteil 66 ein erstes Dichtelement 76, insbesondere ein O-Ring, eingesetzt wird. Hierzu weist das Oberteil 68 eine umlaufende Umrandung 77 mit einer Nut auf, in die das erste Dichtelement 76 einsetzbar ist. Anschließend wird der Kolben 46 samt daran befestigter Kolbenstange 48 und erstem Puffer 60 in das zylindrische Gehäuse 44 eingesetzt und mittels des Deckelelements 70 verschlossen. Das Deckelelement 70 weist dazu einen dritten Durchgang 78 auf, durch welchen sich die Kolbenstange 48 hindurch erstrecken kann, wenn das Deckelelement 70 auf die Kolbenstange 48 aufgeschoben und schließlich in das Innengewinde 74 eingeschraubt wird. Über den Durchgang 78 können die erste Kammer 28 und die dritte Kammer 38 miteinander in Verbindung stehen. Das Deckelelement 70 weist einen umlaufenden Vorsprung 80 auf, der in einen am Oberteil 68 ausgebildeten Rücksprung 82 eingreift und so das Oberteil 68 gegen das Unterteil 66 verspannt und fixiert.

An einer Unterseite 84 des Deckels 12 ist ein zweiter Puffer 86 angeordnet, insbesondere ist der zweite Puffer 86 stoffschlüssig mit der Unterseite 84 des Deckels 12 verbunden. Der zweite Puffer 84 ist aus einem elastomeren Material und weist einen vierten Durchgang 88 auf, durch welchen sich die Kolbenstange 48 hindurch erstreckt. Die Kolbenstange 48 erstreckt sich zudem durch den Deckel 12 und weist an seinem zweiten Ende 90 einen zweiten Gewindeabschnitt 92 auf, auf welchen ein erstes Elastomerlager 94 aufgeschraubt ist. Das erste Elastomerlager 94 fixiert die Kolbenstange 48 an dem Deckel 12. Zur Abdichtung der ersten Kammer 28 gegenüber der Umgebung ist zwischen dem Deckel 12 und der Kolbenstange 48 ein zweites Dichtelement 96, insbesondere ein O-Ring, angeordnet. Der Abrollkolben 14, insbesondere das Unterteil 66, weist zudem einen Aufnahmeabschnitt 98 auf, in den ein zweites Elastomerlager 100 eingebracht, insbesondere eingepresst, ist.

Das Niveausteuerungssystem 26 weist eine Drucklufteinlasseinrichtung 102 zum Zuführen von Druckluft, Gas oder einem kompressiblen Medium und eine Druckluftablasseinrichtung 104 zum Abführen von Druckluft, Gas oder einem kompressiblen Medium auf.

Die Drucklufteinlasseinrichtung 102 weist ein Einlassventil 106, das in einem Boden 108 der zweiten Kammer 30 integriert ist und in die zweite Kammer 30 hineinragt, und eine erste Ventilsteuerungseinrichtung 110 auf. Das Einlassventil 106 ist über eine Anschlusseinrichtung 112 mit einer nicht dargestellten Druckluftquelle, einer nicht dargestellten Gasquelle oder einer nicht dargestellten Quelle mit einem kompressiblen Medium verbindbar und weist zudem einen Stößel 114 zum Betätigen des Einlassventils 106 auf. Die erste Ventilsteuerungseinrichtung 110 weist eine erste Druckfeder 116, eine Führungsstange 118 und zwei auf der Führungsstange 118 frei beweglich angeordnete Spannelemente 120a, 120b auf, wobei die erste Druckfeder 116 zwischen den beiden Spannelementen 120a, 120b aufgenommen ist. Die Führungsstange 118 weist endseitig ein Gewinde 122 auf, mit welchem die Führungsstange 118 in den Deckel 12 eingeschraubt ist. Die Führungsstange 118 erstreckt sich von dem Deckel 12 über den ersten Dämpfungskanal 32 in die zweite Kammer 30 hinein. Auf dem in der zweiten Kammer 30 befindlichen Abschnitt der Führungsstange 118 sind die Spannelemente 120a, 120b frei beweglich auf der Führungsstange 118 angeordnet, wobei sie die erste Druckfeder 116 aufnehmen. Das zweite Spannelement 120b ist von dem Stößel 114 des Einlassventils 106 in der in Fig. 1 gezeigten neutralen Lage oder Nulllage beabstandet, um so einen ersten Freiweg zu bilden.

Die Druckluftablasseinrichtung 104 weist ein Auslassventil 124, das in dem Deckel 12 integriert ist, und eine zweite Ventilsteuerungseinrichtung 126 zum Betätigen des Auslassventils 124 auf. Die zweite Ventilsteuerungseinrichtung 126 weist eine zweite Druckfeder 130 und eine mit der zweiten Druckfeder 130 verbundene Steuerstange 132 auf. Die zweite Druckfeder 130 ist in dem ersten Dämpfungskanal 32 angeordnet, wobei ein erster Abschnitt der Steuerstange 132 in die zweite Druckfeder 130 eingeführt ist. Ein zweiter Abschnitt der Steuerstange 132 erstreckt sich durch die erste Kammer 28 und kontaktiert endseitig das Auslassventil 124. Die Steuerstange 132 weist ferner einen Absatz 133 auf, der die zweite Druckfeder 130 kontaktiert. In der in Fig. 1 gezeigten neutralen Lage oder Nulllage drückt der Absatz 133 die zweite Druckfeder 130 nach unten und spannt diese vor. Dadurch wird ein zweiter Freiweg gebildet.

Im Folgenden werden die Dämpfung und die Niveauregulierung der Luftfeder 10 beschrieben. Während der Einfederung beziehungsweise Beladung rollt der Luftfederbalg 16 an dem Oberteil 68 ab, so dass die erste Kammer 28 komprimiert wird. Dadurch strömt die in der ersten Kammer 28 befindliche Druckluft oder das in der ersten Kammer 28 befindliche Gas oder kompressible Medium über den ersten Dämpfungskanal 33 und den zweiten Dämpfungskanal 35 in die zweite Kammer 30 und erzeugt so einen ersten Dämpfungseffekt. Gleichzeitig wird bei einer Einfederung der Kolben 46 über die Kolbenstange 48 nach unten bewegt, so dass sich das Volumen der dritten Kammer 38 vergrößert und gleichzeitig das Volumen der vierten Kammer 40 verringert. Dadurch strömt die Druckluft, das Gas oder das kompressible Medium aus der vierten Kammer 40 über den dritten Dämpfungskanal 43 in die dritte Kammer 38 und erzeugt so einen zu dem ersten Dämpfungseffekt parallelen zweiten Dämpfungseffekt. Zusätzlich wird bei einer Einfederung beziehungsweise Beladung die erste Ventilsteuerungseinrichtung 110 in Richtung des Stößels 114 des Einlassventils 106 bewegt, bis das Spannelement 120a den ersten Freiweg überwunden hat und den Stößel 114 berührt. Bei einer weiteren Einfederung beziehungsweise Beladung drückt das Spannelement 120a den Stößel 114 nach unten, so dass Druckluft, Gas oder kompressibles Medium einströmen kann. Bei einer weiteren Einfederung wird die erste Druckfeder 116 zwischen dem Spannelement 120a, 120b komprimiert, bis der zweite Puffer 86 an dem Deckelelement 70 anschlägt. Während der Einfederung bleibt das Auslassventil 124 geschlossen, indem die Steuerstange 132 auf das Auslassventil 124 drückt.

Bei einer Ausfederung beziehungsweise Entladung wird die erste Kammer 28 vergrößert, so dass durch den in der ersten Kammer 28 erzeugten Unterdruck die in der zweiten Kammer 30 befindliche Druckluft oder das in der zweiten Kammer 30 befindliche Gas oder kompressible Medium über den ersten Dämpfungskanal 33 und den zweiten Dämpfungskanal 35 in die erste Kammer 28 strömt und so einen ersten Dämpfungseffekt erzielt. Gleichzeitig wird der Kolben 46 bei einer Ausfederung beziehungsweise Entladung nach oben verschoben, so dass die dritte Kammer 38 komprimiert und die vierte Kammer 40 vergrößert wird, wobei Druckluft, Gas oder kompressibles Medium von der dritten Kammer 38 über den dritten Dämpfungskanal 43 in die vierte Kammer 40 strömt und so einen zu dem ersten Dämpfungseffekt parallelen zweiten Dämpfungseffekt bewirkt. Gleichzeitig drückt während einer Ausfederung zunächst die zweite Druckfeder 130 die Steuerstange 132 aufgrund ihrer Vorspannung gegen das Auslassventil 124, so dass das Auslassventil 124 zunächst geschlossen bleibt. Erst wenn die zweite Druckfeder 130 den Absatz 133 gegen den Abrollkolben 14 drückt, ist der zweite Freiweg überwunden, so dass sich der Deckel 12 respektive das Auslassventil 124 von der Steuerstange 132 entfernt. Dadurch wird das Auslassventil 124 geöffnet, so dass Druckluft, Gas oder kompressibles Medium in die Umgebung ausströmen kann. Die Ausfederung wird durch ein Anschlagen des ersten Puffers 60 an dem Deckelelement 70 begrenzt. Während einer Ausfederung bleibt das Einlassventil 106 geschlossen.

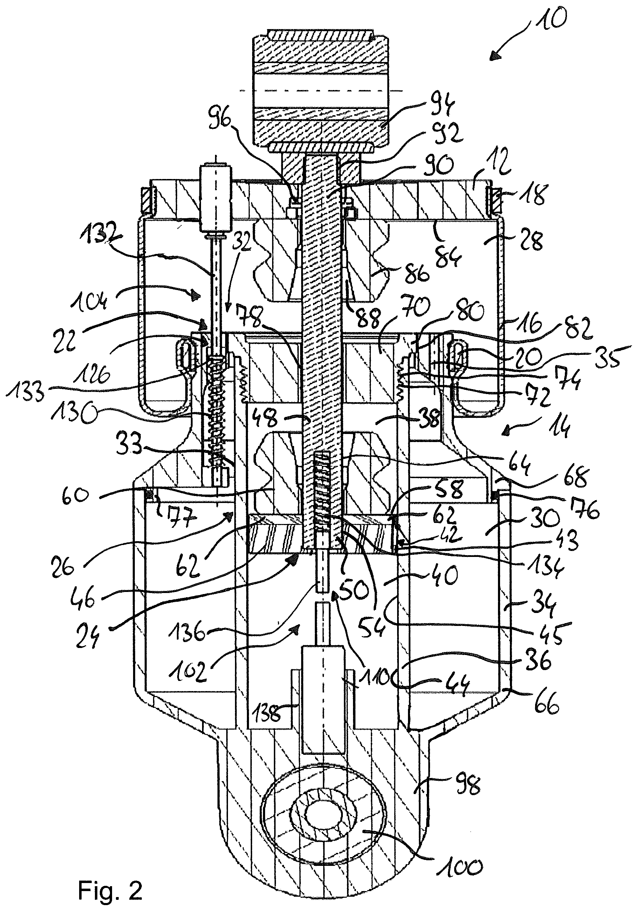

In Fig. 2 ist eine zweite Ausführungsform der Luftfeder 10 gezeigt, die sich von der ersten Ausführungsform durch die Ausgestaltung und der Anordnung der ersten Ventilsteuerungseinrichtung 110, der Anordnung des Einlassventils 106 und der Befestigung des Kolbens 46 und des zweiten Puffers 60 beziehungsweise der Platte 62 an der Kolbenstange 48 unterscheidet. Die erste Ventilsteuerungseinrichtung 110 ist in der Kolbenstange 48 integriert und weist eine dritte Druckfeder 134, die in der Kolbenstange 48 integriert ist, und eine zweite Steuerstange 136 auf, die endseitig mit der dritten Druckfeder 134 verbunden ist und in die vierte Kammer 40 ragt. Das Einlassventil 106 ist in dem Abrollkolben 14, insbesondere in den Aufnahmeabschnitt 98, derart integriert, dass das Einlassventil in die vierte Kammer 40 ragt. Zur Fixierung ist das Einlassventil 106 von einer von dem Abrollkolben 14 in die vierte Kammer 40 ragende Stützwandung 138 umgeben. Die Steuerstange 136 ist in der in Fig. 2 gezeigten neutralen Lage oder Nulllage von dem Stößel 114 des Einlassventils 106 beabstandet, um so den ersten Freiweg zu bilden. Bei einer Einfederung bzw. Beladung wird die erste Ventilsteuerungseinrichtung 110 in Richtung des Stößels 114 des Einlassventils 106 bewegt, bis die zweite Steuerstange 136 den ersten Freiweg überwunden hat und den Stößel 114 berührt. Bei einer weiteren Einfederung beziehungsweise Beladung drückt die zweite Steuerstange 136 den Stößel 114 nach unten, so dass Druckluft einströmen kann. Bei einer weiteren Einfederung wird die dritte Druckfeder 134 komprimiert, bis der zweite Puffer 86 an dem Deckelelement 70 anschlägt. Zur Befestigung des Kolbens 48 und der Platte 60 an der Kolbenstange 48 sind diese auf das erste Ende 50 der Kolbenstange 48 aufgepresst.

Die Luftfeder 10 zeichnet sich durch die Integration zweier parallel geschalteter Dämpfungsvorrichtung 22, 24 aus. Dadurch kann die Dämpfung vergrößert und gleichzeitig der für die Luftfeder benötigte Bauraum reduziert werden. Des Weiteren kann auf eine Außenführung für den Luftfederbalg 16 verzichtet werden, so dass die Montage vereinfacht und gleichzeitig die Luftfeder kostengünstig hergestellt werden kann. Des Weiteren gewährleistet das in der Luftfeder 10 integrierte Niveausteuerungssystem 26, dass ein gewünschtes Niveau der Fahrerkabine oder des Kraftfahrzeugs bei unterschiedlicher Beladung oder Gewichtsbelastung konstant gehalten oder verändert wird.

### Bezugszeichenliste

- 10: Luftfeder
- 12: Deckel
- 14: Abrollkolben
- 16: Luftfederbalg
- 18: erster Klemmring
- 20: zweiter Klemmring
- 22: erste Dämpfungsvorrichtung
- 24: zweite Dämpfungsvorrichtung
- 26: Niveausteuerungssystem
- 28: erste Kammer
- 30: zweite Kammer
- 32: erste Dämpfungskanaleinrichtung
- 33: erster Dämpfungskanal
- 34: Außenwandung
- 35: zweiter Dämpfungskanal
- 36: Innenwandung
- 38: dritte Kammer
- 40: vierte Kammer
- 42: zweite Dämpfungskanaleinrichtung
- 43: dritte Dämpfungskanal
- 44: zylindrisches Gehäuse
- 45: Innenseite
- 46: Kolben
- 48: Kolbenstange
- 50: erstes Ende
- 52: erster Gewindeabschnitt
- 54: erster Durchgang
- 56: Mutter
- 58: Oberseite
- 60: erster Puffer
- 62: Platte
- 64: zweiter Durchgang
- 66: Unterteil
- 68: Oberteil
- 70: Deckelelement
- 72: Außengewinde
- 74: Innengewinde
- 76: erstes Dichtelement
- 77: Umrandung
- 78: dritter Durchgang
- 80: umlaufender Vorsprung
- 82: Rücksprung
- 84: Unterseite
- 86: zweiter Puffer
- 88: vierter Durchgang
- 90: zweites Ende
- 92: zweiter Gewindeabschnitt
- 94: erstes Elastomerlager
- 96: zweites Dichtelement
- 98: Aufnahmeabschnitt
- 100: zweites Elastomerlager
- 102: Drucklufteinlasseinrichtung
- 104: Druckluftablasseinrichtung
- 106: Einlassventil
- 108: Boden
- 110: erste Ventilsteuerungseinrichtung
- 112: Anschlusseinrichtung
- 114: Stößel
- 116: erste Druckfeder
- 118: Führungsstange
- 120a: Spannelement
- 120b: Spannelement
- 122: Gewinde
- 124: Auslassventil
- 126: zweite Ventilsteuerungseinrichtung
- 130: zweite Druckfeder
- 132: Steuerstange
- 133: Absatz
- 134: dritte Druckfeder
- 136: zweite Steuerstange
- 138: Stützwandung

## Patentansprüche

1. Luftfeder (10) zur Dämpfung und Steuerung der Niveaulage einer Fahrerkabine oder eines Kraftfahrzeugs mit einem Deckel (12), einem Abrollkolben (14) und wenigstens einem Luftfederbalg (16), wobei wobei ein Niveausteuerungssystem (26) zum Zuführen und/oder Abführen von Druckluft, Gas oder einem kompressiblen Medium in die Luftfeder (10) integriert ist, um die Niveaulage der Fahrerkabine oder des Kraftfahrzeugs zu steuern, **dadurch gekennzeichnet, dass** mindestens zwei Dämpfungsvorrichtungen (22, 24) in die Luftfeder (10) integriert sind, die als Arbeitsmedium Druckluft, Gas oder ein kompressibles Medium verwenden.

2. Luftfeder (10) nach Anspruch 1, **dadurch gekennzeichnet, dass** die beiden Dämpfungsvorrichtungen (22, 24) parallel geschaltet sind.

3. Luftfeder (10) nach einem der vorhergehenden Ansprüche, **dadurch gekennzeichnet, dass** eine erste Dämpfungsvorrichtung (22) eine im Volumen veränderliche erste Kammer (28), eine im Volumen konstant bleibende zweite Kammer (30) und eine die beiden Kammern (28, 30) miteinander verbindende erste Dämpfungskanaleinrichtung (32) aufweist.

4. Luftfeder (10) nach Anspruch 3, **dadurch gekennzeichnet, dass** die erste Kammer (28) von dem Deckel (12), dem Abrollkolben (14) und dem Luftfederbalg (16) begrenzt ist und dass die zweite Kammer (30) von dem Abrollkolben (14) begrenzt ist, wobei die erste Dämpfungskanaleinrichtung (32) in dem Abrollkolben (14) eingebracht ist.

5. Luftfeder (10) nach einem der Ansprüche 1 bis 4, **dadurch gekennzeichnet, dass** eine zweite Dämpfungsvorrichtung (24) eine im Volumen veränderliche dritte Kammer (38), eine im Volumen veränderliche vierte Kammer (40) und eine die beiden Kammern (38, 40) miteinander verbindende zweite Dämpfungskanaleinrichtung (42) aufweist.

6. Luftfeder (10) nach Anspruch 5, **dadurch gekennzeichnet, dass** die dritte Kammer (38) und die vierte Kammer (40) von einem in dem Abrollkolben (14) ausgebildeten zylindrischen Gehäuse (44) begrenzt sind, wobei die dritte und die vierte Kammer (38, 40) durch einen beweglichen Kolben (46) voneinander getrennt sind.

7. Luftfeder (10) nach einem der vorhergehenden Ansprüche, **dadurch gekennzeichnet, dass** das Niveausteuerungssystem (26) eine Drucklufteinlasseinrichtung (102) zum Zuführen von Druckluft, Gas oder einem kompressiblen Medium und eine Druckluftablasseinrichtung (104) zum Abführen von Druckluft, Gas oder einem kompressiblen Medium umfasst.

8. Luftfeder (10) nach Anspruch 7, **dadurch gekennzeichnet, dass** die Drucklufteinlasseinrichtung (102) und die Druckluftablasseinrichtung (104) derart ausgebildet sind, dass während einer Einfederung nach Überwindung eines ersten Freiwegs die Drucklufteinlasseinrichtung (102) geöffnet und während einer Ausfederung nach Überwindung eines zweiten Freiwegs die Druckluftablasseinrichtung (104) geöffnet ist.

9. Luftfeder (10) nach Anspruch 7 oder 8, **dadurch gekennzeichnet, dass** die Drucklufteinlasseinrichtung (102) wenigstens ein Einlassventil (106) und eine erste Ventilsteuerungseinrichtung (110) aufweist.

10. Luftfeder (10) nach Anspruch 9, **dadurch gekennzeichnet, dass** die erste Ventilsteuerungseinrichtung (110) wenigstens eine erste Druckfeder (116) und einen mit der ersten Druckfeder (116) verbundenen Stößel (114) aufweist.

11. Luftfeder (10) nach Anspruch 9, **dadurch gekennzeichnet, dass** die erste Ventilsteuerungseinrichtung (110) wenigstens eine erste Druckfeder (116), eine Führungsstange (118) und auf der Führungsstange (118) frei beweglich angeordnete Spannelemente (120a, 120b) aufweist, wobei die erste Druckfeder (116) zwischen den beiden Spannelementen (120a, 120b) aufgenommen ist.

12. Luftfeder (10) nach einem der Ansprüche 7 bis 11, **dadurch gekennzeichnet, dass** das Einlassventil (106) in dem Abrollkolben (14) integriert ist.

13. Luftfeder (10) nacheinem der Ansprüche 7 bis 12, **dadurch gekennzeichnet, dass** die Druckluftablasseinrichtung (104) wenigstens ein Auslassventil (124) und eine zweite Ventilsteuerungseinrichtung (126) aufweist.

14. Luftfeder (10) nach Anspruch 13, **dadurch gekennzeichnet, dass** die zweite Ventilsteuerungseinrichtung (126) eine zweite Druckfeder (130) und eine mit der zweiten Druckfeder (130) verbundene Steuerstange (132) aufweist.

15. Luftfeder (10) nach Anspruch 13 oder 14, **dadurch gekennzeichnet, dass** das Auslassventil (124) in dem Deckel (12) integriert ist und dass die zweite Ventilsteuerungseinrichtung (126) in dem Abrollkolben (14) integriert ist.

16. Luftfeder (10) nach einem der vorhergehenden Ansprüche, **dadurch gekennzeichnet, dass** der Abrollkolben (14) ein Unterteil (66), ein eine Abrollkontur aufweisendes Oberteil (68) und ein Deckelelement (70) umfasst, wobei das Deckelelement (70) derart mit dem Unterteil (66) und dem Oberteil (68) verbindbar ist, das alle Teile gegeneinander fixiert sind.

## Claims

1. An air spring (10) for damping and controlling a level position of a driver's cab or of a motor vehicle, the air spring comprising a lid (12), a rolling piston (14) and at least one air spring bellows (16);
wherein a level control system (26) is integrated into the air spring (10) and configured to supply and/or discharge compressed air, gas or a compressible medium so as to control the level position of the driver's cab or of the motor vehicle,
**characterised in that** at least two damping devices (22, 24) are integrated into the air spring (10) which use compressed air, gas or a compressible medium as a working medium.

2. The air spring (10) according to claim 1, **characterised in that** the two damping devices (22, 24) are connected in parallel.

3. The air spring (10) according to one of the preceding claims, **characterised in that** a first damping device (22) has a first chamber (28) with a variable volume, a second chamber (30) whose volume remains constant and a first damping channel device (32) connecting the two chambers (28, 30) with each other.

4. The air spring (10) according to claim 3, **characterised in that** the first chamber (28) is delimited by the lid (12), the rolling piston (14) and the air spring bellows (16), and **in that** the second chamber (30) is delimited by the rolling piston (14), the first damping channel device (32) being incorporated into the rolling piston (14).

5. The air spring (10) according to one of claims 1 to 4, **characterised in that** a second damping device (24) has a third chamber (38) with a variable volume, a fourth chamber (40) with a variable volume and a second damping channel device (42) connecting the two chambers (38, 40) with each other.

6. The air spring (10) according to claim 5, **characterised in that** the third chamber (38) and the fourth chamber (40) are delimited by a cylindrical housing (44) formed in the rolling piston (14), the third and fourth chambers (38, 40) being separated from each other by a movable piston (46).

7. The air spring (10) according to one of the preceding claims, **characterised in that** the level control system (26) comprises a compressed-air inlet device (102) configured to supply compressed air, gas or a compressible medium, and a compressed-air outlet device (104) configured to discharge compressed air, gas or a compressible medium.

8. The air spring (10) according to claim 7, **characterised in that** the compressed-air inlet device (102) and the compressed-air outlet device (104) are configured in such a way that, during spring contraction, the compressed-air inlet device (102) is opened after a first clearance is overcome, and during spring extension, the compressed-air outlet device (104) is opened after a second clearance is overcome.

9. The air spring (10) according to claim 7 or 8, **characterised in that** the compressed-air inlet device (102) has at least one inlet valve (106) and a first valve control device (110).

10. The air spring (10) according to claim 9, **characterised in that** the first valve control device (110) has at least one first compression spring (116) and a tappet (114) connected to the compression spring (116).

11. The air spring (10) according to claim 9, **characterised in that** the first valve control device (110) has at least one first compression spring (116), a guide rod (118) and biasing members (120a, 120b) disposed in a freely movable manner on the guide rod (118), the first compression spring (116) being accommodated between the two biasing members (120a, 120b).

12. The air spring (10) according to one of claims 7 to 11, **characterised in that** the inlet valve (106) is integrated into the rolling piston (14).

13. The air spring (10) according to one of claims 7 to 12, **characterised in that** the compressed-air outlet device (104) has at least one outlet valve (124) and a second valve control device (126).

14. The air spring (10) according to claim 13, **characterised in that** the second valve control device (126) has a second compression spring (130) and a control rod (132) connected to the second compression spring (130).

15. The air spring (10) according to claim 13 or 14, **characterised in that** the outlet valve (124) is integrated into the lid (12), and **in that** the second valve control device (126) is integrated into the rolling piston (14).

16. The air spring (10) according to one of the preceding claims, **characterised in that** the rolling piston (14) comprises a bottom part (66), a top part (68) having a rolling contour, and a lid member (70), the lid member (70) being connectable to the bottom part (66) and the top part (68) in such a way that all parts are fixed relative to one another.

## Revendications

1. Ressort pneumatique (10) pour amortir et commander l'assiette d'une cabine de conducteur ou d'un véhicule automobile, comportant un couvercle (12), un piston déroulant (14) et au moins un soufflet de ressort pneumatique (16), un système de commande d'assiette (26) destiné à alimenter et/ou à évacuer de l'air comprimé, du gaz ou un milieu compressible étant intégré dans le ressort pneumatique (10) pour commander l'assiette de la cabine de conducteur ou du véhicule automobile,
**caractérisé en ce que**
au moins deux dispositifs d'amortissement (22, 24) sont intégrés dans le ressort pneumatique (10) qui utilisent en tant que milieu de travail de l'air comprimé, du gaz ou un milieu compressible.

2. Ressort pneumatique (10) selon la revendication 1,
**caractérisé en ce que**
les deux dispositifs d'amortissement (22, 24) sont branchés en parallèle.

3. Ressort pneumatique (10) selon l'une des revendications précédentes, **caractérisé en ce que**
un premier dispositif d'amortissement (22) comprend une première chambre (28) de volume variable, une seconde chambre (30) de volume constant et un premier moyen formant canal d'amortissement (32) reliant les deux chambres (28, 30) l'une à l'autre.

4. Ressort pneumatique (10) selon la revendication 3,
**caractérisé en ce que**
la première chambre (28) est délimitée par le couvercle (12), par le piston déroulant (14) et par le soufflet de ressort pneumatique (16), et **en ce que** la seconde chambre (30) est délimitée par le piston déroulant (14), le premier moyen formant canal d'amortissement (32) étant intégré dans le piston déroulant (14).

5. Ressort pneumatique (10) selon l'une des revendications 1 à 4, **caractérisé en ce que**
un second dispositif d'amortissement (24) comprend une troisième chambre (38) de volume variable, une quatrième chambre (40) de volume variable et un second moyen formant canal d'amortissement (42) reliant les deux chambres (38, 40) l'une à l'autre.

6. Ressort pneumatique (10) selon la revendication 5,
**caractérisé en ce que**
la troisième chambre (38) et la quatrième chambre (40) sont délimitées par un boîtier cylindrique (44) réalisé dans le piston déroulant (14), la troisième et la quatrième chambre (38, 40) étant séparées l'une de l'autre par un piston mobile (46).

7. Ressort pneumatique (10) selon l'une des revendications précédentes, **caractérisé en ce que** le système de commande d'assiette (26) comprend un moyen d'entrée d'air comprimé (102) pour alimenter de l'air comprimé, du gaz ou un milieu compressible, et un moyen de sortie d'air comprimé (104) pour évacuer de l'air comprimé, du gaz ou un milieu compressible.

8. Ressort pneumatique (10) selon la revendication 7,
**caractérisé en ce que**
le moyen d'entrée d'air comprimé (102) et le moyen de sortie d'air comprimé (104) sont réalisés de telle sorte que le moyen d'entrée d'air comprimé (102) est ouvert pendant un débattement rentrant, après avoir surmonté une première course libre, et que le moyen de sortie d'air comprimé (104) est ouvert pendant un débattement sortant, après avoir surmonté une seconde course libre.

9. Ressort pneumatique (10) selon la revendication 7 ou 8,
**caractérisé en ce que**
le moyen d'entrée d'air comprimé (102) comprend au moins une vanne d'entrée (106) et un premier moyen de commande de vanne (110).

10. Ressort pneumatique (10) selon la revendication 9,
**caractérisé en ce que**
le premier moyen de commande de vanne (110) comprend au moins un premier ressort de compression (116) et un poussoir (114) relié au premier ressort de compression (116).

11. Ressort pneumatique (10) selon la revendication 9,
**caractérisé en ce que**
le premier moyen de commande de vanne (110) comprend au moins un premier ressort de compression (116), une tige de guidage (118) et des éléments de serrage (120a, 120b) agencés de façon librement mobile sur la tige de guidage (118), le premier ressort de compression (116) étant reçu entre les deux éléments de serrage (120a, 120b).

12. Ressort pneumatique (10) selon l'une des revendications 7 à 11,
**caractérisé en ce que**
la vanne d'entrée (106) est intégrée dans le piston déroulant (14).

13. Ressort pneumatique (10) selon l'une des revendications 7 à 12,
**caractérisé en ce que**
le moyen de sortie d'air comprimé (104) comprend au moins une vanne de sortie (124) et un second moyen de commande de vanne (126).

14. Ressort pneumatique (10) selon la revendication 13,
**caractérisé en ce que**
le second moyen de commande de vanne (126) comprend un second ressort de compression (130) et une tige de commande (132) reliée au second ressort de compression (130).

15. Ressort pneumatique (10) selon la revendication 13 ou 14,
**caractérisé en ce que**
la vanne de sortie (124) est intégrée dans le couvercle (12), et **en ce que** le second moyen de commande de vanne (126) est intégré dans le piston déroulant (14).

16. Ressort pneumatique (10) selon l'une des revendications précédentes,
**caractérisé en ce que**
le piston déroulant (14) comprend une partie inférieure (66), une partie supérieure (68) pourvue d'un contour de déroulement, et un élément de couvercle (70), l'élément de couvercle (70) étant relié à la partie inférieure (66) et à la partie supérieure (68) de telle sorte que toutes les parties sont fixées les unes par rapport aux autres.
